# EUROPÄISCHE PATENTSCHRIFT

(11) **EP 1 520 759 B1**
(45) Veröffentlichungstag und Bekanntmachung des Hinweises auf die Patenterteilung: **07.11.2007**
(21) Anmeldenummer: 04012967.8
(22) Anmeldetag: 02.06.2004
(51) Int. Cl.: B60S 1/34, B60S 1/48, B60S 1/52

(54) **Wischarm mit wenigstens einem Kanal für eine Reinigungsflüssigkeit**
Wiper arm with at least one channel for a washing fluid
Bras d'essuie-glace avec au moins un canal pour fluid nettoyant

(30) Priorität: 30.09.2003 DE 10345804
(43) Veröffentlichungstag der Anmeldung: 06.04.2005
(73) Patentinhaber: ROBERT BOSCH GMBH, 70442 Stuttgart (DE)
(72) Erfinder: Zimmer, Joachim, 77880 Sasbach (DE); Weiler, Michael, 363-9 Chungchongbuk-Do (KR)

(56) Entgegenhaltungen:
- DE-A- 19 816 213
- FR-A- 1 228 171
- FR-A- 2 646 801
- US-A- 2 333 854
- US-A- 2 925 617

## Beschreibung

### Stand der Technik

Die Erfindung geht aus von einem Wischarm nach dem Oberbegriff des Anspruchs 1.

Aus der DE 198 54 309 A1 ist ein Wischarm bekannt, der einen Innenraum und einen Kanal für eine Reinigungsflüssigkeit aufweist, der in einem Abschnitt im Innenraum verläuft.

Ein solcher Wischarm ist ebenfalls aus dem FR-A-2646801 bekannt.

### Vorteile der Erfindung

Die Erfindung geht aus von einem Wischarm, der wenigstens einen Innenraum und zumindest einen Kanal für eine Reinigungsflüssigkeit aufweist, der zumindest in einem Abschnitt im Innenraum verläuft.

Es wird vorgeschlagen, dass der Wischarm einen gelenkfrei realisierten Freiheitsgrad zur Erzeugung einer Auflagekraft aufweist, wobei zwei verschiedene stabile Konfigurationen vorgesehen sind, die durch den Freiheitsgrad (α) ineinander überführt werden können. Dadurch kann eine Vorrichtung des Kanals zur Umgehung eines Gelenks vorteilhaft eingespart werden, und der Kanal kann auf der gesamten Länge des Wischarms eng an diesem entlanggeführt und besonders vorteilhaft zumindest in einem Abschnitt im Innenraum des Wischarms geführt werden, wodurch Verschleiß vermieden und der Kanal vor äußeren Einflüssen geschützt werden kann. Insbesondere ein kostengünstig als Kunststoffschlauch ausgelegter Kanal kann geschützt geführt werden. Ein gelenkfrei realisierter Freiheitsgrad zur Erzeugung einer Auflagekraft erweitert die sich durch eine teilweise Integration des Kanals in den Wischarm ergebenden Möglichkeiten für eine aerodynamische Gestaltung einer Gesamtform des Wischarms.

Unter gelenkfrei realisiertem Freiheitsgrad soll in diesem Zusammenhang verstanden werden, dass ohne eine materiell ausgeführte Schwenkachse eine Bewegung ermöglicht wird. Bauteile, die infolge einer Materialverformung, insbesondere infolge einer elastischen Verformung, eine Relativbewegung zwischen einer Wischstange bzw. Teilbereichen der Wischstange und einem Befestigungsteil ermöglichen, sollen in diesem Zusammenhang nicht als Gelenk angesehen werden und sollen insbesondere vom Schutzbereich mit umfasst sein, wie beispielsweise Filmscharniere, federelastische Teilstücke, Blattfedern, federelastische Wischstangen usw.

Weiterhin sollen in diesem Zusammenhang auch halboffene Räume, zum Beispiel an der Innenseite eines U- oder V-Profils, die geeignet sind, einen Kanal für Reinigungsflüssigkeiten vor Witterungs- und/oder Krafteinflüssen, zum Beispiel durch Fahrtwind, zu schützen, als Innenräume bezeichnet werden. Die Reinigungsflüssigkeit kann den Innenraum ausfüllen oder aber in einer separaten, zum Beispiel als Schlauch ausgebildeten Leitung durch den Innenraum geleitet werden.

Eine besonders vorteilhafte Abschirmung des Kanals und/oder eine schlanke Bauweise des Wischarms können erreicht werden, wenn der Innenraum zumindest in einem Abschnitt von einem Rohrprofil gebildet ist. Dabei kann ein Rumpf des Wischarms sowohl einstückig als auch mehrstückig, zum Beispiel mit einer Wischstange, die über ein Blattfederelement mit einem Befestigungsteil verbunden ist, ausgeführt sein und für jedes der Bauteile ist ein Rohrprofil denkbar.

In einer weiteren Ausgestaltung der Erfindung wird vorgeschlagen, dass der Kanal zumindest in einem Abschnitt einstückig mit einem tragenden Teil des Wischarms ausgeführt ist. Durch die einstückige Bauweise werden vorteilhaft Bauteile eingespart, und eine robuste Gestaltung des Wischarms wird ermöglicht. Besonders vorteilhaft lässt sich ein Innenraum eines Rohrprofils als Kanal nutzen.

Weist der Wischarm einen federelastischen Teilbereich auf, insbesondere zur Realisation des Freiheitsgrads zur Erzeugung der Auflagekraft, zum Abklappen des Wischarms und/oder zum Ausgleich von Hubbewegungen, kann der Kanal in diesem Bereich vorteilhaft durch eine flexible Abdeckvorrichtung geschützt sein, die zumindest den während des Betriebs des Wischarms auftretenden Deformationen folgen kann. Dies kann sowohl durch eine Abdeckvorrichtung aus einem flexiblen Material als auch durch eine flexibel bzw. beweglich gelagerte Abdeckvorrichtung erreicht werden. Ausgestaltungen der Erfindung, in denen der Kanal einstückig in die flexible Abdeckvorrichtung integriert ist oder in denen die flexible Abdeckvorrichtung als Spoiler ausgebildet ist, sind ferner denkbar.

In einer weiteren Ausgestaltung der Erfindung wird vorgeschlagen, dass der Innenraum zumindest eine Öffnung aufweist, in die eine Düse integriert ist. Dadurch kann eine Sprühvorrichtung besonders platzsparend und aerodynamisch in den Wischarm integriert werden, und eine unabhängige Einheit mit Düsen kann vorteilhaft eingespart werden. Dabei kann die Düse insbesondere in die Öffnung eingelassen sein oder kann zumindest teilweise an den Wischarm einstückig angeformt sein. Um ein ungewolltes Auslaufen der Reinigungsflüssigkeit zu verhindern, umfasst die Düse besonders vorteilhaft ein Rückschlagventil, welches den Kanal immer dann nach außen verschließt, wenn ein Innendruck im Kanal eine durch das Rückschlagventil definierte Druckschwelle unterschreitet.

Weist der Wischarm ferner einen Sprühkopf mit zumindest einer Düse auf, der an einem freien Ende des Wischarms aufgesteckt ist, kann eine Schutzfunktion für das freie Ende in den Sprühkopf integriert und ein Sprühkopf mit großer radialer Reichweite während einer Wischbewegung erreicht werden.

Ist zudem in einer Vorrichtung eine Antriebswelle derart auf den Wischarm abgestimmt, dass der Kanal durch die Antriebswelle fortgesetzt ist, kann vorteilhaft ein vollständig geschützter Durchgriff des Kanals in eine Fahrzeugkarosserie und eine in jeder Phase einer Wischbewegung wohl definierte Führung des Kanals erreicht werden.

Ferner wird vorgeschlagen, dass der Freiheitsgrad zur Erzeugung einer Auflagekraft mit einer Blattfeder realisiert ist. Dabei kann die Blattfeder vorteilhaft von einem Gelenk geführt sein. Ein mit einer Blattfeder realisierter Freiheitsgrad zur Erzeugung einer Auflagekraft kann, auch von einem Gelenk unterstützt, hinsichtlich der flachen, aerodynamischen Bauweise ähnliche Vorteile wie ein gelenkfrei realisierter Freiheitsgrad ermöglichen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorrichtung mit einem Wischarm, der einen Kanal für eine Reinigungsflüssigkeit aufweist,
- Fig. 2 - 8: Details der Vorrichtung aus Figur 1,
- Fig. 9 u. 10: Details einer alternativen Vorrichtung mit einem Kanal für eine Reinigungsflüssigkeit, der teilweise einstückig mit einer Wischstange ausgeführt ist,
- Fig. 11 - 14: Details einer weiteren alternativen Vorrichtung mit einer flexiblen Abdeckvorrichtung,
- Fig. 15 - 17: Details einer weiteren alternativen Vorrichtung mit einem Sprühkopf und
- Fig. 18 u. 19: Ausschnitte einer weiteren alternativen Vorrichtung mit einem durch eine Blattfeder und ein Gelenk gebildeten Freiheitsgrad zur Erzeugung einer Auflagekraft.

### Beschreibung der Ausführungsbeispiele

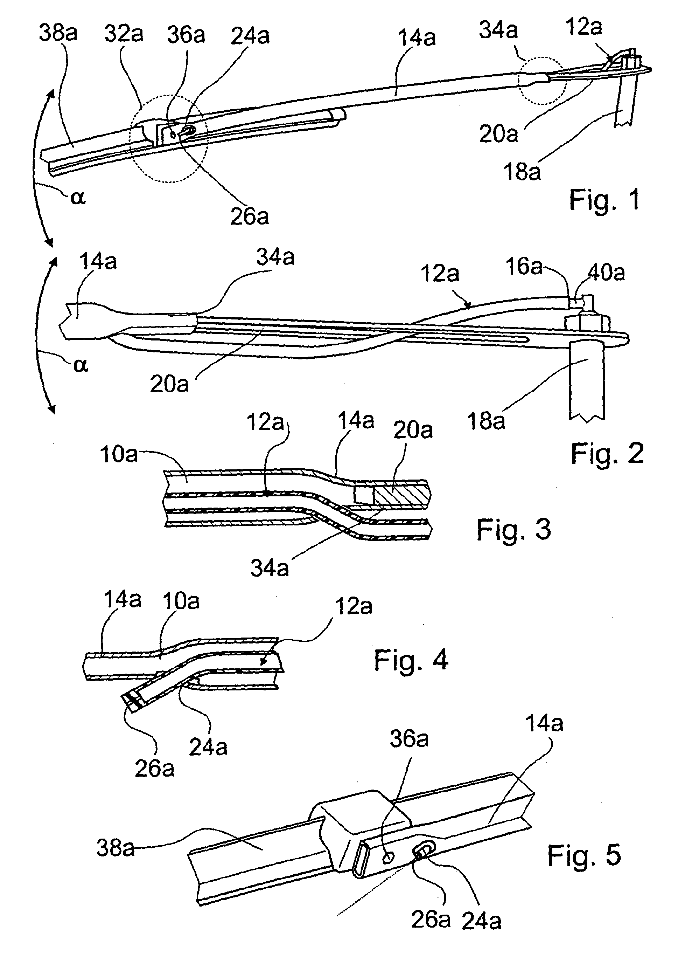

Die Figuren 1 bis 8 zeigen eine Vorrichtung mit einem Wischarm, der einen Innenraum 10a und einen Kanal 12a für eine Reinigungsflüssigkeit aufweist, der in einem von einer Wischstange 14a gebildeten Abschnitt des Wischarms im Innenraum 10a verläuft. Durch einen als Blattfeder ausgebildeten federelastischen Teilbereich 20a, der gleichzeitig als Befestigungsteil dient, ist ein Freiheitsgrad α zur Erzeugung einer Auflagekraft gelenkfrei realisiert.

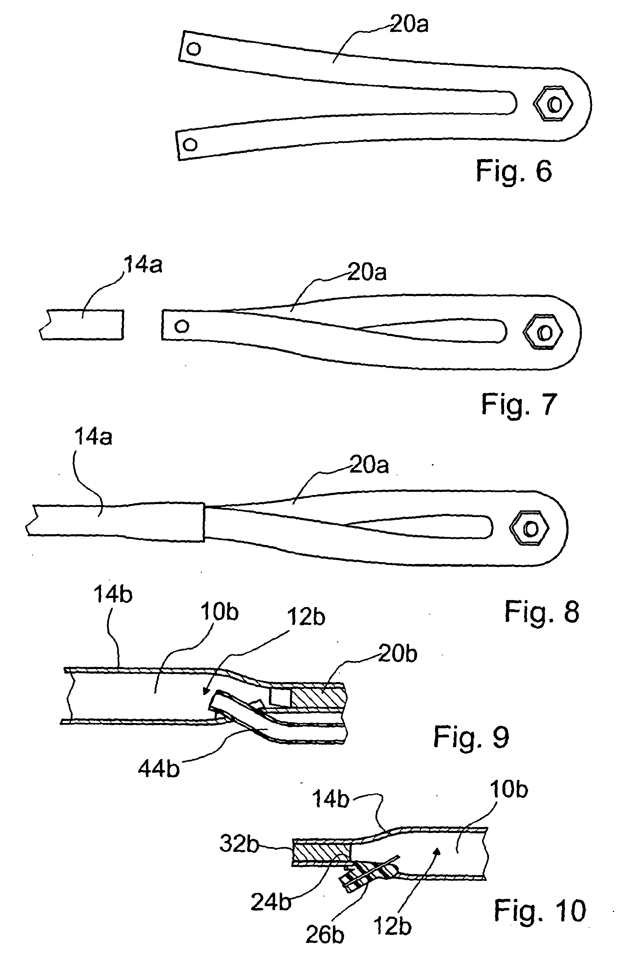

Die Wischstange 14a hat in einem zentralen Bereich ein Rohrprofil, das den Innenraum 10a bildet. Sowohl an einem befestigungsseitigen Ende 34a als auch an einem freien Ende 32a ist das Profil der Wischstange 14a abgeflacht. An ersterem nimmt sie den federelastischen Teilbereich 20a auf, während an letzterem über eine Niete 36a ein Wischblatt 38a befestigt ist. Der federelastische Teilbereich 20a weist in einer Konfiguration ohne Krafteinwirkung (Fig. 6) zwei v-förmige, zu ihren freien Enden nach außen gekrümmte Schenkel mit jeweils einem Loch an ihrem Ende auf. Bei einer Montage werden die beiden Enden der Schenkel unter Krafteinwirkung übereinander gebracht, wobei die beiden Löcher übereinander zu liegen kommen (Fig. 7). In dieser Konfiguration werden die beiden Schenkel in das befestigungsseitige Ende 34a der Wischstange 14a eingeschoben und mittels eines Blechdurchzugs an den Löchern in Richtung der Längserstreckung der Wischstange 14a fixiert.

Im montierten Zustand wölben sich die Innenseiten der Schenkel des federelastischen Teilbereichs 20a aus einer von diesem aufgespannten Ebene nach oben oder nach unten aus. Diese beiden Richtungen der Auswölbung kennzeichnen zwei verschiedene stabile Konfigurationen des Wischarms, die durch den Freiheitsgrad α zur Erzeugung einer Auflagekraft ineinander überführt werden können. Eine der beiden Konfigurationen kann als stabile Abklappstellung eine komfortable Montage und Demontage des Wischblatts 38a ermöglichen, während die andere eine Anlieferstellung definiert, wobei die Auflagekraft durch eine Rückstellkraft in die Anlieferstellung gegeben ist.

Der Kanal 12a weist eine Anschlussstelle 16a auf, über die er über ein Rohrende 40a an eine Fortsetzung des Kanals 12a durch eine Antriebswelle 18a hindurch angeschlossen ist. Der Kanal 12a ist als Schlauch ausgebildet, der zwischen den Schenkeln hindurch von einer Oberseite zu einer Unterseite des federelastischen Teilbereichs 20a geführt ist. Von dort verläuft der Kanal 12a durch ein erstes Loch am befestigungsseitigen Ende 34a der Wischstange 14a in deren Innenraum 10a und ist über ein zweites Loch am freien Ende 32a der Wischstange 14a aus dem Innenraum 10a herausgeführt. Am Ende des Kanals 12a verengt sich dieser und bildet eine Düse 26a.

In den Figuren 9 bis 18 sind alternative Ausführungsbeispiele dargestellt. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele die Buchstaben "a" - "e" hinzugefügt sind. Ferner kann bezüglich gleich bleibender Merkmale und Funktionen auf die Beschreibung zum Ausführungsbeispiel in den Figuren 1 bis 8 verwiesen werden. Die nachfolgende Beschreibung beschränkt sich im Wesentlichen auf die Unterschiede zum Ausführungsbeispiel in den Figuren 1 bis 8.

Die Figuren 9 und 10 stellen ein befestigungsseitiges Ende und ein freies Ende 32b einer Wischstange 14b einer alternativen Vorrichtung mit einem Kanal 12b für eine Reinigungsflüssigkeit dar. Die Wischstange 14b ist ein tragendes Bauteil eines Wischarms der Vorrichtung. Am befestigungsseitigen Ende wird die Reinigungsflüssigkeit über einen Schlauch 44b in einen Innenraum 10b der Wischstange 14b eingeleitet, so dass dieser einen Abschnitt des Kanals 12b bildet und der Kanal 12b in diesem Abschnitt einstückig mit der Wischstange 14b ausgeführt ist. In eine Öffnung 24b des Innenraums 10b am freien Ende 32b der Wischstange 14b, die im Betrieb mit der Reinigungsflüssigkeit gefüllt ist, ist eine von einem Kunststoffteil gebildete Düse 26b eingelassen.

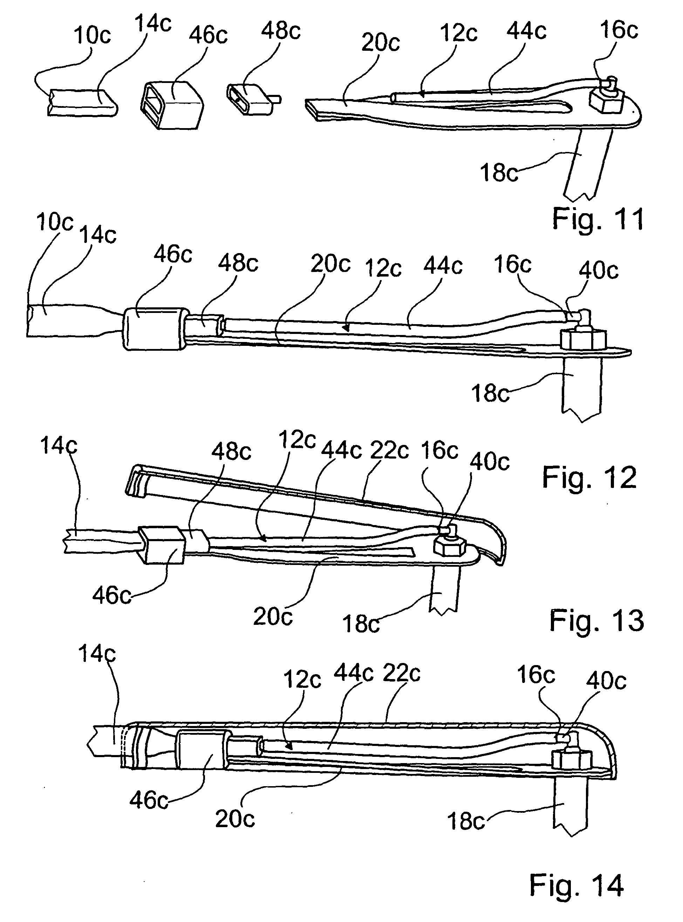

Die Figuren 11 bis 14 stellen einen befestigungsseitigen Bereich einer weiteren alternativen Vorrichtung dar, bei der Schenkel des federelastischen Teilbereichs 20c von einer ersten Seite und ein offenes, flachgedrücktes befestigungsseitiges Ende einer Wischstange 14c von einer zweiten Seite in einen Adapter 46c eingeführt werden. An den Adapter 46c wird über eine Schlauchaufnahme 48c ein in diesem Bereich als Schlauch 44c ausgebildeter Kanal 12c angeschlossen und auf diese Weise in den Innenraum 10c der Wischstange 14c fortgesetzt. Zum Schutz des Schlauchs 44c am federelastischen Teilbereich 20c vor äußeren Einflüssen weist die Vorrichtung bzw. ein Wischarm der Vorrichtung eine als Zwei-Komponenten-Bauteil ausgeführte Abdeckvorrichtung 22c aus gummielastischem Kunststoff auf, die über eine aus hartem Kunststoff gefertigte Klammer 52c flexibel verschiebbar mit der Wischstange 14c verbunden ist.

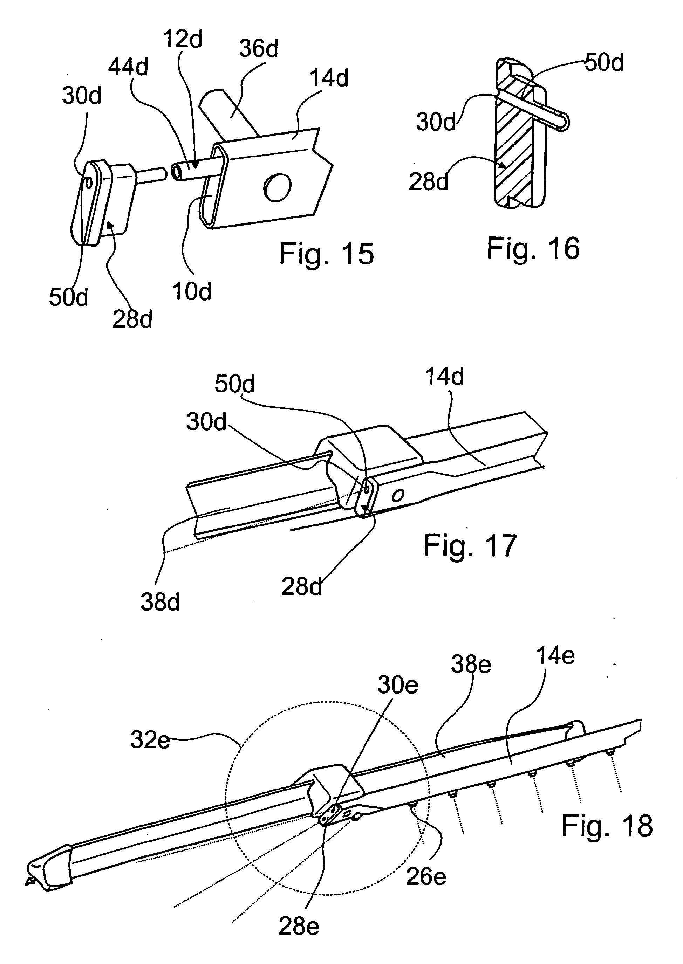

Ein Bereich an einem freien Ende 32d einer Wischstange 14d einer weiteren alternativen Vorrichtung ist in den Figuren 15 bis 17 dargestellt. Auf das freie Ende 32d der Wischstange 14d ist ein Sprühkopf 28d aufgesteckt, der aus einem Plastikstöpsel mit einer engen Öffnung 50d besteht, die eine Düse 30d bildet und durch die Reinigungsflüssigkeit auf eine zu wischende Fläche gespritzt werden kann. Die Düse 30d weist an einer der Wischstange 14d zugewandten Seite eine röhrenförmige Verlängerung auf, die in einen Schlauch 44d für die Reinigungsflüssigkeit eingeführt werden kann.

Figur 18 zeigt einen Ausschnitt einer weiteren alternativen Vorrichtung mit einem Wischarm, an dessen freiem Ende ein Sprühkopf 28e mit zwei Düsen 30e auf eine Wischstange 14e aufgesteckt ist. Zudem weist der Wischarm Öffnungen in der Wischstange 14e auf, in die von Kunststoffteilen gebildete Düsen 26e eingelassen sind. Die Düsen 26e, 30e umfassen vorgelagerte, integrierte Rückschlagventile mit einer Membran, die einen Spalt öffnet, wenn ein Innendruck in einem Kanal 12e einen Schwellenwert überschreitet. Hinsichtlich der Ausführung der Rückschlagventile sind auch andere, dem Fachmann als sinnvoll erscheinende Möglichkeiten, wie zum Beispiel Ausgestaltungen, in denen der Innendruck einer Federkraft entgegenwirkt, denkbar.

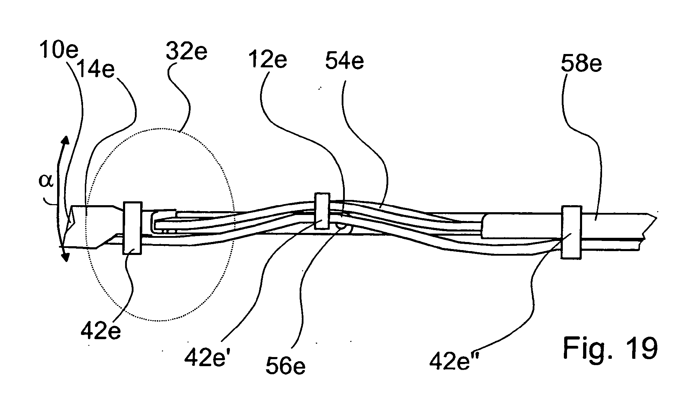

An einem befestigungsseitigen Ende ist die Wischstange 14e über eine Blattfeder 54e und ein Gelenk 56e mit einem separaten Befestigungsteil 58e verbunden (Fig. 19). Das Gelenk 56e ist mit der Blattfeder 54e gekoppelt und bildet einen Freiheitsgrad α zur Erzeugung einer Auflagekraft. Ein Kanal 12e für eine Reinigungsflüssigkeit ist aus einem flexiblen Kunststoffschlauch gefertigt, der im Bereich der Blattfeder 54e an dieser entlanggeführt und mit Kunststoffklammern 42e, 42e', 42e" befestigt ist.

### Bezugszeichen

- 10: Innenraum
- 12: Kanal
- 14: Wischstange
- 16: Anschlussstelle
- 18: Antriebswelle
- 20: Teilbereich
- 22: Abdeckvorrichtung
- 24: Öffnung
- 26: Düse
- 28: Sprühkopf
- 30: Düse (am Kopf)
- 32: Ende
- 34: Ende
- 36: Niete
- 38: Wischblatt
- 40: Rohrende
- 42: Kunststoffklammer
- 44: Schlauch
- 46: Adapter
- 48: Schlauchaufnahme
- 50: Öffnung
- 52: Klammer
- 54: Blattfeder
- 56: Gelenk
- 58: Befestigungsteil
- α: Freiheitsgrad

## Patentansprüche

1. Wischarm, der wenigstens einen Innenraum (10a - 10c) und zumindest einen Kanal (12a - 12d) für eine Reinigungsflüssigkeit aufweist, der zumindest in einem Abschnitt im Innenraum (10a - 10c) verläuft, wobei ein gelenkfrei realisierter Freiheitsgrad (α) zur Erzeugung einer Auflagekraft vorgesehen ist, **dadurch gekennzeichnet, dass** zwei verschiedene stabile Konfigurationen vorgesehen sind, die durch den Freiheitsgrad (α) ineinander überführt werden können.

2. Wischarm nach Anspruch 1, **dadurch gekennzeichnet, dass** der Innenraum (10a - 10c) von einem Rohrprofil gebildet ist.

3. Wischarm nach einem der vorhergehenden Ansprüche, **dadurch gekennzeichnet, dass** der Kanal (12b, 12c) zumindest in einem Abschnitt einstückig mit einem tragenden Bauteil (14b, 14c) ausgeführt ist.

4. Wischarm nach einem der vorhergehenden Ansprüche, **gekennzeichnet durch** einen federelastischen Teilbereich (20c), in dem der Kanal (12c) **durch** eine flexible Abdeckvorrichtung (22c) geschützt ist.

5. Wischarm nach einem der vorhergehenden Ansprüche, **dadurch gekennzeichnet, dass** der Innenraum (10a, 10b) zumindest eine Öffnung (24a, 24b) aufweist, in die eine Düse (26a, 26b) integriert ist.

6. Wischarm nach einem der vorhergehenden Ansprüche, **gekennzeichnet durch** einen Sprühkopf (28d, 28e) mit zumindest einer Düse (30d, 30e), der an einem freien Ende (32a - 32e) aufgesteckt ist.

7. Vorrichtung mit einem Wischarm nach einem der vorhergehenden Ansprüche und einer Antriebswelle (18a, 18c), wobei der Kanal (12a- 12e) durch die Antriebswelle (18a, 18c) fortgesetzt ist.

## Claims

1. Wiper arm which has at least one interior space (10a-10c) and at least one channel (12a-12d) for a washing fluid, which channel runs at least in one section in the interior space (10a-10c), with a degree of freedom (α), which is realized in a joint-free manner, being provided in order to generate a bearing force, **characterized in that** two different stable configurations are provided which can be transferred one inside the other by the degree of freedom (α).

2. Wiper arm according to Claim 1, **characterized in that** the interior space (10a-10c) is formed by a tubular profile.

3. Wiper arm according to one of the preceding claims, **characterized in that** the channel (12b, 12c) is designed to be integral, at least in one section, with a supporting component (14b, 14c).

4. Wiper arm according to one of the preceding claims, **characterized by** a spring-elastic partial region (20c) in which the channel (12c) is protected by a flexible covering device (22c).

5. Wiper arm according to one of the preceding claims, **characterized in that** the interior space (10a, 10b) has at least one opening (24a, 24b) in which a nozzle (26a, 26b) is integrated.

6. Wiper arm according to one of the preceding claims, **characterized by** a spray head (28d, 28e) with at least one nozzle (30d, 30e), which spray head is plugged onto a free end (32a-32e).

7. Device with a wiper arm according to one of the preceding claims and with a driveshaft (18a, 18c), the channel (12a-12e) being continued by the driveshaft (18a, 18c).

## Revendications

1. Bras d'essuie-glace comportant au moins une cavité (10a - 10c) et au moins un canal (12a - 12d) pour un liquide de nettoyage, passant dans au moins un segment de la cavité (10a - 10c), avec un degré de liberté (α) réalisé sans articulation pour créer une force d'application,
**caractérisé par**
deux configurations stables, différentes, entre lesquelles on passe par le degré de liberté (α).

2. Bras d'essuie-glace selon la revendication 1,
**caractérisé en ce que**
la cavité (10a - 10c) est formée par un profil tubulaire.

3. Bras d'essuie-glace selon l'une des revendications précédentes,
**caractérisé en ce que**
le canal (12b, 12c) est réalisé dans au moins un segment, en une seule pièce avec un composant porteur (14b, 14c).

4. Bras d'essuie-glace selon l'une des revendications précédentes,
**caractérisé par**
une zone partielle (20c) élastique comme un ressort, dans laquelle le canal (12c) est protégé par un dispositif de couverture souple (22c).

5. Bras d'essuie-glace selon l'une des revendications précédentes,
**caractérisé en ce que**
le volume intérieur (10a, 10b) comporte au moins une ouverture (24a, 24b) dans laquelle est intégrée une buse (26a, 26b).

6. Bras d'essuie-glace selon l'une quelconque des revendications précédentes,
**caractérisé par**
une tête de pulvérisation (28d, 28e) avec au moins une buse (30d, 30e) emmanchée sur une extrémité libre (32a - 32e).

7. Dispositif comportant un bras d'essuie-glace selon l'une des revendications précédentes et un arbre d'entraînement (18a, 18c), le canal (12a - 12e) se prolongeant à travers l'arbre d'entraînement (18a, 18c).
